# EUROPEAN PATENT APPLICATION

(11) **EP 1 542 164 A1**
(43) Date of publication of application: **15.06.2005**
(21) Application number: 03794054.1
(22) Date of filing: 03.03.2003
(51) Int. Cl.: G06T 7/00, H04N 1/46, H04N 1/60

(54) **VISION AID NETWORK SERVER, VISION AID NETWORK SYSTEM, VISION AID METHOD, VISION AID SYSTEM, COLOR SENSE FUNCTION REPORTING SYSTEM, PROGRAM FOR REPORTING COLOR SENSE FUNCTION, METHOD FOR REPORTING COLOR SENSE FUNCTION, COLOR SENSE AID SYSTEM, COLOR SENSE AID PROGRAM, AND COLOR SENSE AID METHOD**

(30) Priority: 29.08.2002 JP 2002250762; 09.12.2002 JP 2002356497
(71) Applicant: Kistem Co. Ltd., Otsu-shi, Shiga 520-0047 (JP)
(72) Inventor: IKADO, Kazuyoshi, Otsu-shi, Shiga 520-0047 (JP)
(74) Representative: Vollnhals, Aurel, Dipl.-Ing.
(86) International application number: PCT/JP2003/002470
(87) International publication number: WO 2004/023397

(57) **Abstract**

An object of the present invention is to provide a visual aid network system for supporting people with color vision deficiency, using high functionality, conveniently portable size, and proliferation of mobile phones equipped with a digital camera. A visual aid network server of the present invention comprises: image data receiving means for receiving image data from a portable terminal; user data storing means for storing the image received by the image data receiving, means; image color data analyzing means for obtaining the image data from the user data storing means to generate color data of the image; and color data transmitting means for transmitting the color data generated by the image color data analyzing means to the portable terminal.

## Description

### FIELD OF THE INVENTION

The present invention relates to a visual aid service system, and a network server and a method for providing this visual aid service. More specifically, the present invention relates to a system for visually aiding elderly people and people with color vision deficiency who face some inconveniences in their everyday lives using a network. In addition, the present invention relates to a defective color vision notification system for allowing the user to know the presence of an unrecognizable color portion of the screen, defective color vision notification program, defective color vision notification method, color discrimination aid system, color discrimination aid program, and color discrimination aid method.

### BACKGROUND OF THE INVENTION

There are more people who have congenital color vision deficiency than we might think. It is said that as many as 5% of men, but only 0.2% of women have some degree of congenital color vision deficiency. Total color blindness, in which the world is seen only in black, white, and gray, is vary rare. Most common color vision deficiency is color weakness, or the inability of distinguishing any one or two wavelength(s) of red, green, and blue.

A person with color weakness does not have any significant problems in his/her everyday life. However, when he/she buys, matches, or selects items that attract the others' attentions, such as clothing and home decorations, he/she wants to know actual colors of the items. Furthermore, he/she is put in danger in some occasions because of his/her confusion of colors. In such cases, it is very convenient for him/her to perceive actual color of an item using a simple method.

A device for indicating the color of an object by voice to a person with color vision deficiency has been known so far. However, the person with color vision deficiency hesitates to use this device, because the use of this device makes others aware of his/her color vision deficiency. Further, since color vision efficiency does not interfere with his/her everyday life very much and there is no need to know an actual color all the time, it is unpleasant to carry such device.

Further, a device for converting character information into voice using a personal computer has been practically used so far for supporting the visually impaired. Furthermore, a system for supporting the visually impaired in identifying display colors of a personal computer and recognizing character information via the Internet has been already developed (Japanese Patent Application No. 2002-98419).

In recent years, mobile phones have been increasingly popular and have been a mainstream of telecommunication and e-mail transmission. However, there are still few functions and methods designed to support visually impaired users including those who have color vision deficiency and low vision. Recently, mobile phones have more and more diversified functions and become more compact and light-weight. Further, some of them are equipped with a digital camera functions, so that digital images taken by such digital camera can be sent and received through the network.

Accordingly, it is an object of the present invention is to provide a visual aid network system for supporting people with color vision deficiency, using high functionality, conveniently portable size, and proliferation of mobile phones equipped with a digital camera.

There has so far been developed software for supporting a person with color vision deficiency in identifying proper color of image displayed on the screen. (For example, non-patent reference "WhatColor by Hikaru Nakahara", "online", April in 1997, [searched in December 4, 2002], Internet, see <http://www.hikarun.com/w/>) According to this software, the name of color of the point specified by the mouse cursor can be displayed as characters on the display screen.

However, the name of color is not displayed until the user specifies a certain point with the mouse cursor. Therefore, if the user wants to know whether or not there is any part on the screen, the color of which he/she can hardly distinguish, he/she must point to all parts on the screen with a mouse. In addition, this software does not address user's respective color vision characteristics, because all the names of colors of the points pointed with a mouse are displayed as characters. Further, even if the user can recognize the color of the point specified by the mouse, he/she cannot recognize a pattern or a character on that point in some cases because of its surrounding color.

As the result of our researches to track down the above problems and to overcome the above disadvantages, we have eventually found the present invention.

Accordingly, it is an object of the present invention to provide a system, program, and method that allows the user to know whether or not there is any part on the screen, the color of which the user can hardly distinguish, and that can address user's respective color vision characteristics. Another object of the present invention is to provide a system, program, and method that allows the user to know not only color but also design or letter of that part.

### SUMMARY OF THE INVENTION

A visual aid network server of the present invention comprises: image data receiving means for receiving image data from a portable terminal; user data storing means for storing the image data received by the image data receiving means; image color data analyzing means for obtaining the image data from the user data storing means to generate color data of the image data; and color data transmitting means for transmitting the color data generated by the image color data analyzing means to the portable terminal.

The aforementioned color data transmitting means may transmit the color data to the portable terminal via a network.

The aforementioned network may be the Internet.

The aforementioned visual aid network server may comprise web page distribution means for distributing the color data and the image data to the network by displaying them on a web page.

The aforementioned color data transmitting means may transmit the color data to the portable terminal via e-mail.

The aforementioned user data storing means may register a phone number of the portable terminal and the aforementioned color data transmitting means may obtain the phone number from the user data storing means and transmit the color data of the image data received form the portable terminal to the portable terminal having the phone number as voice data.

The aforementioned image color data analyzing means may generate color data of a region around a central dot of the received image.

The aforementioned image color data analyzing means may generate color data of a region around a dot specified on the web page of the portable terminal by a pointer, and the aforementioned color data transmitting means may transmit the color data generated by the image color data analyzing means to the potable terminal.

In the visual aid network system according to the present invention, the visual aid network server receives image data and transmits the color data to the portable terminal.

A visual aid method according to the present invention, in which a visual aid network server and a portable terminal receive and transmit image data and color data via a network, comprises the steps of: photographing image with a camera built in the portable terminal; transmitting the image data to the visual aid network server via a network by portable sending and receiving means of the portable terminal; receiving the image data by image data receiving means of the visual aid network server; storing the image data received by the image data receiving means by user data storing means of the visual aid network server; obtaining the image data from the user data storing means by image color data analyzing means of the visual aid network server so as to generate color data from the image data; transmitting the color data generated by the image color data analyzing means to the portable terminal via the network by the color data transmitting means of the visual aid network server; and receiving the color data transmitted by color data transmitting means via the network by the portable sending and receiving means of the portable terminal.

The aforementioned network may be the Internet.

The aforementioned visual aid network server may comprise web page distribution means that distributes the color data and the image data to the network by displaying them on a web page.

The aforementioned color data transmitting means may transmit the color data to the portable terminal via e-mail.

The aforementioned user data storing means may register a phone number of the portable terminal and the aforementioned color data transmitting means may obtain the phone number from the user data storing means and transmit the color data of the image data received form the portable terminal to the portable terminal having the phone number as voice data.

The aforementioned image color data analyzing means generates color data of a region around a central dot of the received image.

The aforementioned image color data analyzing means may generate color data of a region around a dot specified on the web page by a pointer, and the aforementioned color data transmitting means may transmit the color data generated by the image data generated by the image color data analyzing means to the potable terminal.

A visual aid system that is built in a portable terminal comprises: photographing means for photographing image; user data storing means for storing the image photographed by the photographing means; image color data analyzing means for generating color data of the image stored in the user data storing means; and color data displaying means for displaying the color data generated by the image color data analyzing means.

A defective color vision notification system of the present invention is characterized by comprising: storing means for storing user's color vision characteristics data; capturing means for capturing original image data of a display screen of a computer; preparing means for preparing conversion image data by converting the original image data in accordance with the user's color vision characteristics data; pixel comparing means for comparing the original image data with the conversion image data for each pixel to prepare comparison image data; surrounding comparing means for comparing conversion image data of a pixel in which the comparison image data exceeds a certain pixel comparison threshold value with conversion image data around the pixel; unrecognizable part determining means for determining, as a unrecognizable part, a split screen portion comprising more than a certain value of pixel in which a comparison value obtained by a comparison made by the surrounding comparing means does not exceed a certain surrounding comparison threshold value; mark displaying means for displaying a mark on a display screen where the unrecognizable part is present to indicate the presence of the unrecognizable part; and unrecognizable part displaying means for prominently displaying the unrecognizable part on the screen.

In this specification, the term "conversion image data" is image data converted into color that the user can actually perceive. The term "pixel" means a single picture element or a group of picture elements. The "unrecognizable part" is a part, the shape, pattern, color and character of which the user can hardly recognize because of his/her defective color vision. The term "split screen" means a single pixel or a group of pixels.

The defective color vision notification system of the present invention is characterized in that the aforementioned unrecognizable part displaying means displays the unrecognizable part by inverting, shading, and boldfacing the original image data of the unrecognizable part. -

The defective color vision notification system of the present invention is characterized by comprising: color vision characteristics displaying means for displaying color vision characteristics display data based on the aforementioned color vision characteristics data; color vision characteristics changing means for changing the aforementioned color vision characteristics display data, and image changing means for searching for a corresponding portion related to the aforementioned color vision characteristics display data in the aforementioned screen and prominently displaying image data of the corresponding portion on the screen.

A defective color vision notification program of the present invention is characterized by making a computer function as: storing means for storing user's color vision characteristics data; capturing means for capturing original image data of a display screen of a computer; preparing means for preparing conversion image data by converting the original image data in accordance with the user's color vision characteristics data; pixel comparing means for comparing the original image data with the conversion image data for each pixel to prepare comparison image data; surrounding comparing means for comparing conversion image data of a pixel in which the comparison image data exceeds a certain pixel comparison threshold value with conversion image data around the pixel; unrecognizable part determining means for determining, as a unrecognizable part, a split screen portion comprising more than a certain value of pixel in which a comparison value obtained by a comparison made by the surrounding comparing means does not exceed a certain surrounding comparison threshold value; mark displaying means for displaying a mark on a display screen where the unrecognizable part is present to indicate the presence of the unrecognizable part; and unrecognizable part displaying means for prominently displaying the unrecognizable part on the screen.

A defective color vision notification method of the present invention is characterized by comprising the steps of: storing user's color vision characteristics data by storing means; capturing original image data of a display screen of a computer by capturing means; preparing conversion image data by converting the original image data in accordance with the user's color vision characteristics data by preparing means; comparing the original image data with the conversion image data for each pixel to prepare comparison image data by pixel comparing means; comparing conversion image data of a pixel in which the comparison image data exceeds a certain pixel comparison threshold value with conversion image data around the pixel by surrounding comparing means; determining, as a unrecognizable part, a split screen portion comprising more than a certain value of pixel in which a comparison value obtained by a comparison made by the surrounding comparing means does not exceed a certain surrounding comparison threshold value by unrecognizable part determining means; displaying a mark on a display screen where the unrecognizable part is present to indicate the presence of the unrecognizable part by mark displaying means; and prominently displaying the unrecognizable part on the screen by unrecognizable part displaying means.

A color discrimination aid system of the present invention is characterized by comprising: storing means for storing user's color vision characteristics data; color vision characteristics displaying means for displaying color vision characteristics display data based on the color vision characteristics data; color vision characteristics changing means for changing the color vision characteristics display data, and image changing means for searching for a corresponding portion related to the color vision characteristics display data in the screen and prominently displaying image data of the corresponding portion on the screen. The color vision characteristics display data is data for displaying the color vision characteristics data and is stored separately from the color vision characteristics data.

In this specification, the "corresponding portion" is a portion having the same or similar color as the one specified by the color vision characteristics data or a portion having opposite color in a color space. The term "color space" indicates LMS color space, RGB color space, sRGB color space, or Lab color space. "To prominently display image data" by the image changing means is to invert, shade, or boldface image data, or to change the color of the image data into opposite color thereof.

The color discrimination aid system of the present invention is characterized in that the aforementioned image changing means searches for a corresponding portion related to the changed color vision characteristics display data and prominently displays image data of the corresponding portion on the screen when changing the color vision characteristics display data.

The color discrimination aid system of the present invention is characterized in that the aforementioned color vision characteristics display data is defined by selecting a point, line, or range in a color space and that the aforementioned color vision characteristics changing means changes the color vision characteristics data by adding or deleting the aforementioned point, line, or range or changing the position of the point, line, or range in the color space.

The color discrimination aid system of the present invention is characterized in that the aforementioned color vision characteristics display data is changed by continuously changing the position of the point, line, or range in the color space. "Continuously changing the position" dose not mean changing the position by separate actions but changing the position in an analog fashion.

A color discrimination aid program of the present invention is characterized by making a computer function as: storing means for storing user's color vision characteristics data; color vision characteristics displaying means for displaying color vision characteristics display data based on the color vision characteristics data; color vision characteristics changing means for changing the color vision characteristics display data; and image changing means for searching for a corresponding portion related to the color vision characteristics display data in the screen and prominently displaying image data of the corresponding portion on the screen.

A color discrimination aid method of the present invention is characterized by comprising the steps of: storing user's color vision characteristics data by storing means; displaying color vision characteristics display data based on the color vision characteristics data by color vision characteristics displaying means; changing the color vision characteristics display data by color vision characteristics changing means; and searching for a corresponding portion related to the color vision characteristics display data in the screen and prominently displaying image data of the corresponding portion on the screen by image changing means.

The defective color vision notification system of the present invention, further comprises: color vision characteristics displaying means for displaying color vision characteristics display data based on the color vision characteristics data; color vision characteristics changing means for changing the color vision characteristics display data; and image changing means for searching for a corresponding portion related to the color vision characteristics display data in the screen and prominently displaying image data of the corresponding portion.

### BRIEF DESCRIPTION OF THE DRAWINGS

FIG. 1 is a schematic view of a visual aid network server.
FIG. 2 schematically shows a case where a mobile phone K is connected to a visual aid network server N via a network to which the visual aid network server N belongs.
FIG. 3 schematically shows a case where a mobile phone K is connected to a visual aid network server via the Internet.
FIG. 4 shows a display screen of a mobile phone equipped with a camera on which a unicolor T-shirt with no patter is displayed.
FIG. 5 shows a display screen of a mobile phone equipped with a camera on which a T-shirt with a horizontal strip is displayed.
FIG. 6 shows a display screen of a mobile phone equipped with a camera on which a T-shirt with a horizontal strip and simplified color data are displayed.
FIG. 7(a) shows a display screen of a mobile phone equipped with a camera on which color data is displayed as words, FIG. 7(b) shows a display screen of a mobile phone equipped with a camera on which color data is displayed as a bar graph, and FIG. 7(c) shows a display screen of a mobile phone equipped with a camera on which color data is displayed for each pointer.
FIG. 8 is a block diagram showing a defective color vision notification system according to the present invention.
FIG. 9 is a block diagram showing a color discrimination aid system according to the present invention.
FIG. 10 is a graph showing a color vision characteristics data to be used in the defective color vision notification system and the color discrimination aid system according to the present invention.
FIG. 11 shows a sample web page in which the defective color vision notification system of the present invention is to be employed.
FIG. 12 shows data prepared by the defective color vision notification system of the present invention.
FIG. 13 shows a sample web page in which the defective color vision notification system of the present invention is employed.
FIG. 14 shows a sample web page in which the defective color vision notification system of the present invention is employed.
FIG. 15 shows a part of the web page shown in FIG. 14.
FIG. 16 shows a sample web page in which a color discrimination aid system of the present invention is employed.
FIG. 17 is a block diagram showing another embodiment of the visual aid system of the present invention.

### Description of the preferred embodiments

In the embodiments of the present invention, a visual aid network system of the present invention will be described with commercially available mobile phone K equipped with a camera taken as an example. Also, a visual aid method will be described in conjunction with functions and advantageous effects of the network system.

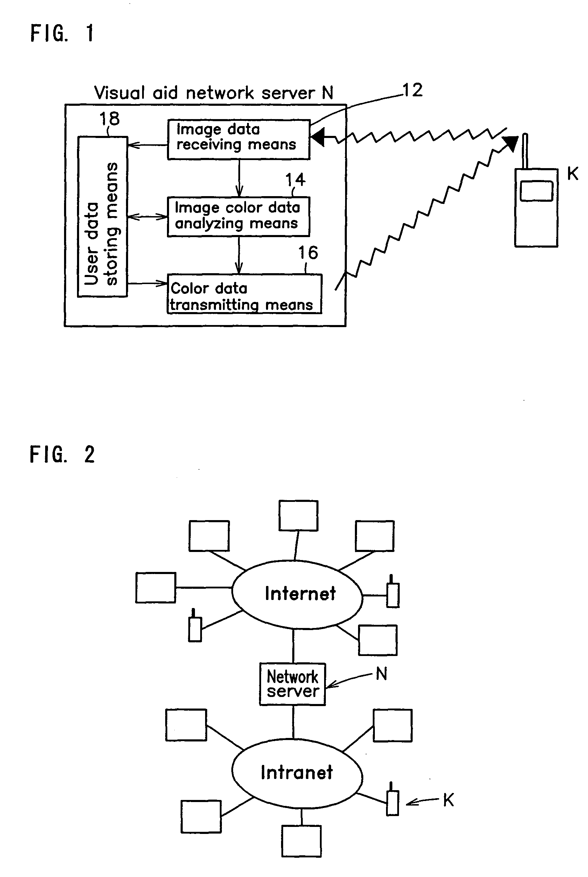

A visual aid network server N of the present invention comprises: image data receiving means 12; image color data analyzing means 14; color data transmitting means 16; and user data storing means 18, as shown in FIG. 1. In general, the mobile phone K has an e-mail function. In this embodiment, the color data transmitting means 16 may be an e-mail function.

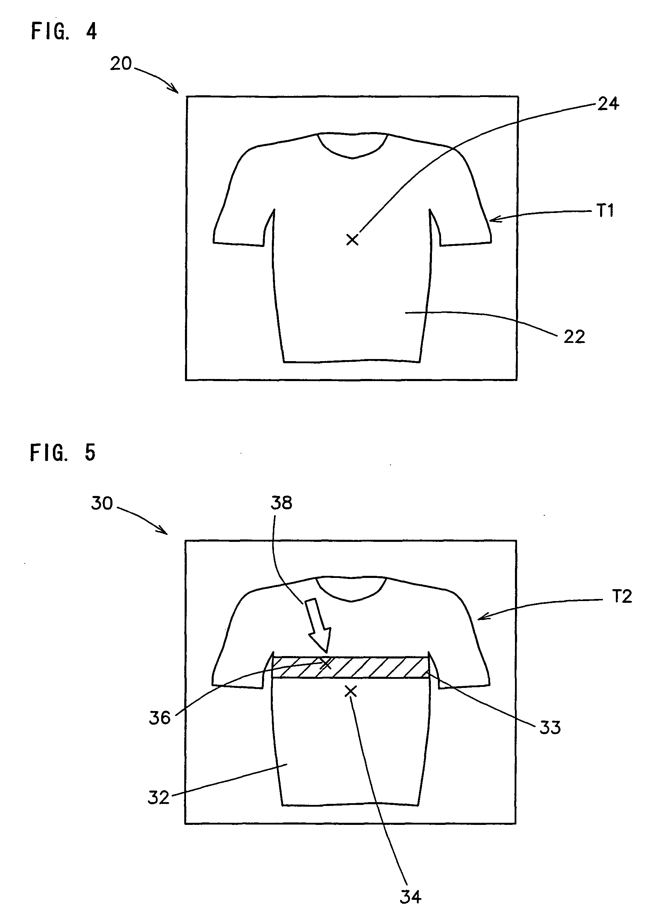

For example, it will be described where a person S with color weakness wants to know a color of a single-colored object T1 with no pattern using a visual aid network server (FIG. 4). The person S takes a photo of the object T1 with the mobile phone K and attaches an image data file to an e-mail message. Then the person S transmits the e-mail message to an e-mail address of the visual aid network server N from the mobile phone K.

The e-mail message is then received by the image data receiving means 12 of the visual aid network server N via a network. The received image data is transmitted to the user data storing means 18, and stored in a previously-registered user area.

In the image 20, dots are arranged in a matrix pattern, and each dot has its own RGB (Red, Green, Blue) value. The image color data analyzing means 14 reproduces the image 20 attached to the e-mail message at once, and analyzes a color of a region 24 around a central dot of the image 20, for example. This is because it is most reasonable to check a hue of the central part of the image when the one wants to know the approximate hue of the image. However, it is also no problem to analyze other part.

Color information obtained from the analysis performed by the image color data analyzing means 14 includes color, brightness (tone and luminance), and sharpness (chroma and saturation) of the object T1. It may also include metallic luster and transparency of the object T1 as well.

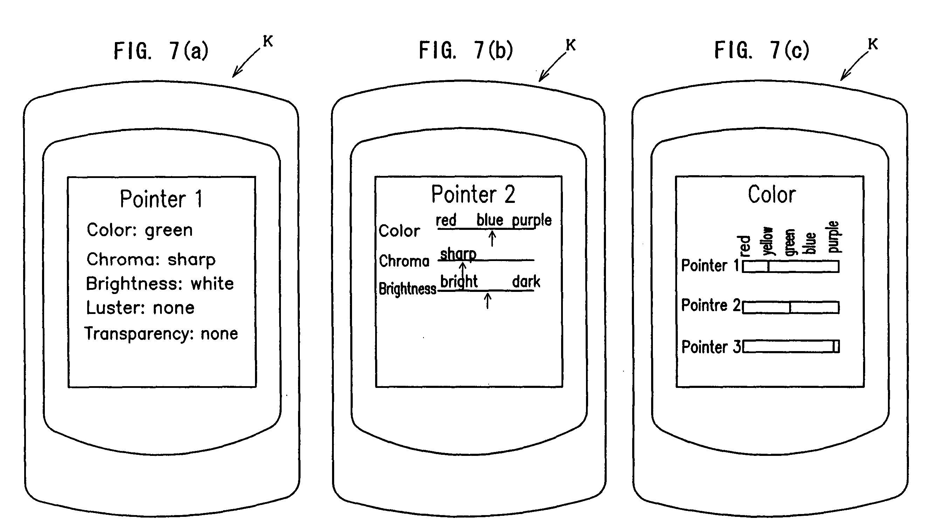

Color data obtained by the analysis performed by the image color data analyzing means 14 can be represented as shown in FIG. 7a and 7b, for example, and then transmitted from the color data transmitting means 16 to the mobile phone K of the person S as an e-mail message.

A color hue is selected from red, orange, yellow, green, blue green, blue, blue purple, purple, and red purple, or selected from more color variations. A color saturation is represented as very bright red, bright red, light red, very light red, and white. A color brightness is represented as white, bright gray, gray, dark gray, and black.

Alternatively, as shown in FIG. 7c, the degrees of the aforementioned three color factors can be represented as a bar graph or as a circle graph. Such a graph with color names listed is useful for a person with color vision deficiency as a color discrimination training.

Thus the person S knows the color information of the single-colored object T1 with no patterns. When the object T1 is photographed with the mobile phone K equipped with a camera and then an e-mail message with image data attached is transmitted to the visual aid network system, the e-mail message automatically contains color data of the object T1. Thus this network system is quite simple and convenient.

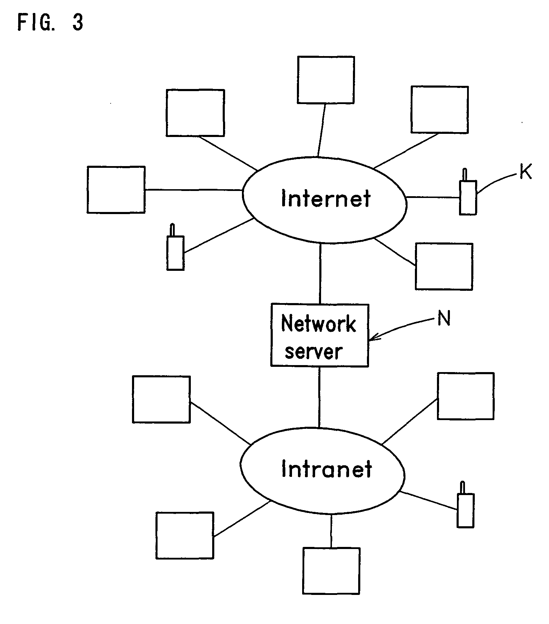

As shown in FIG. 2, the mobile phone may be connected with the visual aid network service N via an intranetwork to which the visual aid network service N belongs. If the user is not in that intranetwork, the mobile phone may be connected to the visual aid network server N through the Internet, as shown in FIG. 3.

The above example is the case where the object T1 is single-colored. Another example where the object is colored green 32 and has a horizontal stripe 33 on it, as shown in FIG. 5, will be described.

First, as is the case with the aforementioned example, the person S photographs the object T2 with a mobile phone K. Next, image data 30 is attached to an e-mail message and is transmitted to a visual aid network server N.

Image color data analyzing means 14 analyzes color of a region around a central dot 34, and accumulates the aforementioned data in user data storing means 18, as is the case with the aforementioned example. At the same time, the image color data analyzing means 14 transmits color data to the mobile phone K of the person S through color data transmitting means 16 as an e-mail message or through other method.

However, the person S with color vision deficiency may often be confused about whether it is the color data on the horizontal stripe or the color data on the basic color. In this case, the color data and the image data stored in the user data storing means 18 is used so as to prevent the need to take a photo of the object T2 again and to prevent the need to transmit another image data to the user data storing means 18.

Specifically, the person S accesses the visual aid network server N through the Internet or the like and displays a web page stored in the user data storing means 18 on the display screen of the mobile phone K. Then, the person S displays the image of the object T2 and specifies a point of an area whose color he/she wants to know by placing a pointer on it using a keypad. For example, if the person S wants to know the color of the horizontal strip 33, he/she specifies a point 36 in the horizontal strip by placing the pointer on it.

In this case, the image color data analyzing means 14 analyzes the color of the point 36. In this way, the person S can obtain color information of the point 36 included in the horizontal strip 33 by specifying a desired point with a pointer.

In the aforementioned example, the color of the central point 34 of the data transmitted with an e-mail message is analyzed first, and then the color of the point 36 of the image data stored in the visual aid network server N is analyzed by specifying it by the pointer. However, in another example, a plurality of desired points can be specified by pointers at a time.

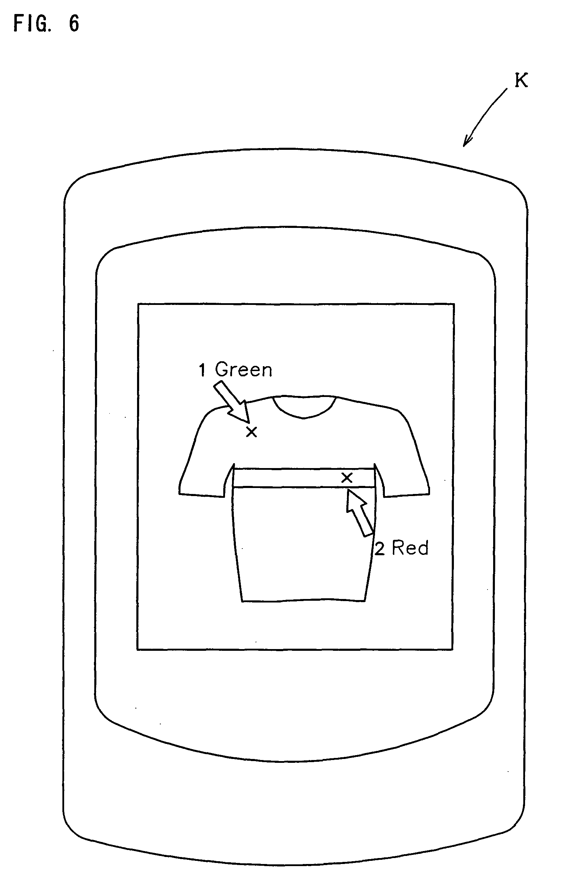

For example, as shown in FIG. 6, one point may be specified by a pointer 1 and another point may be specified by a pointer 2. In this case, the visual aid network server N may write simple information such as pointers and colors to the image received from the mobile phone K, and then send back the image data to the mobile phone K. It is also preferable to visually display color data as a graph.

Alternatively, only a color hue may be displayed for each pointer, as shown in FIG. 7c.

In both of the above examples, the color data transmitting means 16 transmits the color data obtained by the analysis performed by the image color data analyzing means 14 via e-mail to the mobile phone K of the person S. However, the color data may be conveyed to the person S by voice by making a phone call to the mobile phone K. Specifically, when the mobile phone K accesses the visual aid network server, the storing means 18 of the network server searches for a registered phone number of a target person, the color data transmitting means makes a phone call to the mobile phone K, and then generated color data is conveyed to the person S by voice.

Since color data is conveyed by a phone, nobody around the person S becomes aware that the person S has color vision deficiency.

Thus, anyone can use the visual aid network system, as far as the registration is made with a host computer in a network to which the network server belongs. Alternatively, anyone can use this system by making the registration with the storing means 18 of the visual aid network server. Upon registration, the URL of the visual aid network server is provided. Billing method is not particularly limited.

Alternatively, the visual aid network system may be used without registration. In this case, the user may be charged depending on the number of uses. Billing method and payment method are not particularly limited.

In the aforementioned examples, a mobile phone is used as a portable terminal. However, when the user is in the room, a personal terminal can be used for accessing the visual aid network system. In this case, the user can obtain color data by home telephone, while photographed image is being displayed on the screen. According to what is registered, the visual aid network system can be used in combination of various equipments.

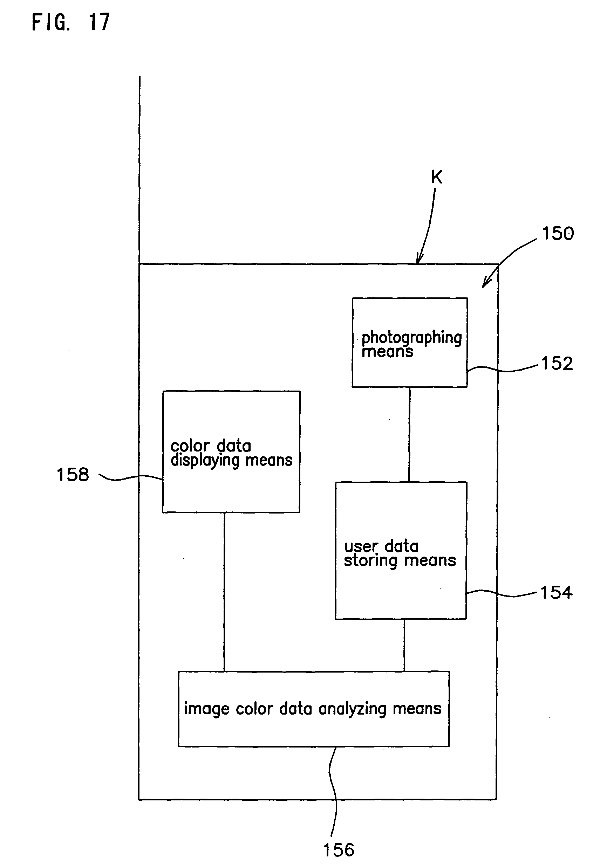

The present invention may be a visual aid system 150 built in the portable terminal K, as shown in FIG. 17. The visual aid system 150 comprises: photographing means 152 for photographing image; user data storing means 154 for storing the image photographed by the photographing means 152; image color data analyzing means 156 for generating color data of the image stored in the user data storing means 154; and color data displaying means 158 for displaying the color data generated by the image color data analyzing means 156. The photographing means 152 is composed of an element such as CMOS and CCD. The user data storing means 154 and the image color data analyzing means 156 are a memory or CPU in the portable terminal K. The color data displaying means 158 is a display screen or the like of the portable terminal K. In the case of this visual aid system 150, color data can be recognized without using the Internet.

Next, a defective color vision notification system, defective color vision notification program, defective color vision notification method, color discrimination aid system, color discrimination aid program, and color discrimination aid method will be described with reference to the accompanying drawings.

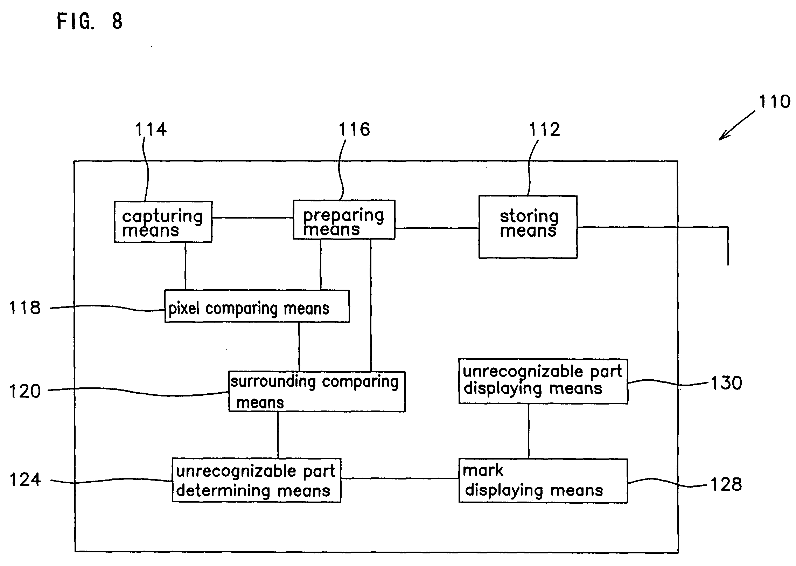

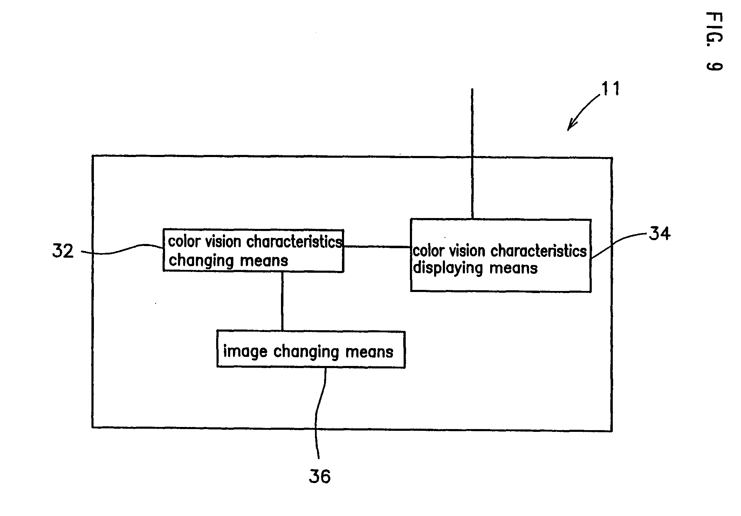

In FIG. 8, numeral 110 designates a defective color vision notification system of the present invention, and in FIG. 9, numeral 111 designates a color discrimination aid system of the present invention.

As shown in FIG. 8, the defective color vision notification system 110 comprises: storing means 112 for storing user's color vision characteristics data D; capturing means 114 for capturing original image data A of a display screen of a computer; preparing means 116 for preparing conversion image data B by converting the original image data A in accordance with the user's color vision characteristics data D; pixel comparing means 118 for comparing the original image data A with the conversion image data B for each pixel to prepare comparison image data C; surrounding comparing means 120 for comparing conversion image data B of a pixel in which the comparison image data exceeds a certain pixel comparison threshold value with conversion image data B around the pixel; unrecognizable part determining means 124 for determining, as a unrecognizable part 122, a split screen portion comprising more than a certain value of pixel in which a comparison value obtained by a comparison made by the surrounding comparing means 120 does not exceed a certain surrounding comparison threshold value; mark displaying means 128 for displaying an exclamation mark 126 on a display screen where the unrecognizable part 122 is present to indicate the presence of the unrecognizable part 122; and unrecognizable part displaying means 130 for prominently displaying the unrecognizable part 122 on the screen.

The defective color vision notification program of the present invention makes a computer function as: storing means 112; capturing means 114; preparing means 116; pixel comparing means 118; surrounding comparing means 120; unrecognizable part determining means 124; mark displaying means 128; and unrecognizable part displaying means 130. This defective color vision notification program may be executed by a portable terminal or a server as well as a personal computer.

As shown in FIG. 9, the color discrimination aid system 111 of the present invention comprises: storing means 112; color vision characteristics displaying means 134 for displaying color vision characteristics display data E based on the color vision characteristics data D; color vision characteristics changing means 132 for changing the color vision characteristics display data E; and image changing means 136 for searching for a corresponding portion related to the color vision characteristics display data E in the screen and prominently displaying the original image data A of the corresponding portion on the screen. The storing means 112 is shared by the defective color vision notification system 110 and the color discrimination aid system 111.

The color discrimination aid program of the present invention makes a computer function as: storing means 112; color vision characteristics displaying means 134; color vision characteristics changing means 132; and image changing means 136. This color discrimination aid program may be executed by a potable terminal or a server as well as a personal computer.

The defective color vision notification system 110 and the color discrimination aid system 111 will be described below to explain the defective color vision notification method and the color discrimination aid method.

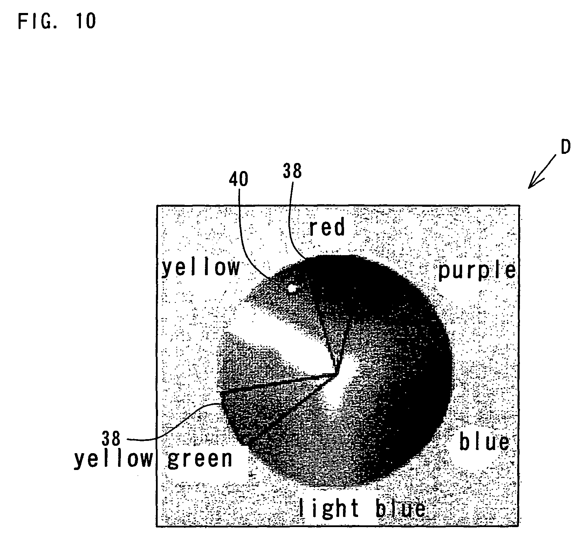

When the user who uses the defective color vision notification system 110 and the color discrimination aid system 111 activates a personal computer and starts the color discrimination aid system 111, a display for checking color vision characteristics appears on the screen. The user enters an answer to each question. For example, if the question is "what color do you have difficulty in seeing?" , the user enters an answer "red" to the question. On the basis of the entered answer, the defective color vision notification system 110 prepares color vision characteristics data D and then stores it in the storing means 112. For example, the color vision characteristics data D is as shown in FIG. 10, in which a range 138 for defective color vision can be defined by lines or a point 140 in HSB color space.

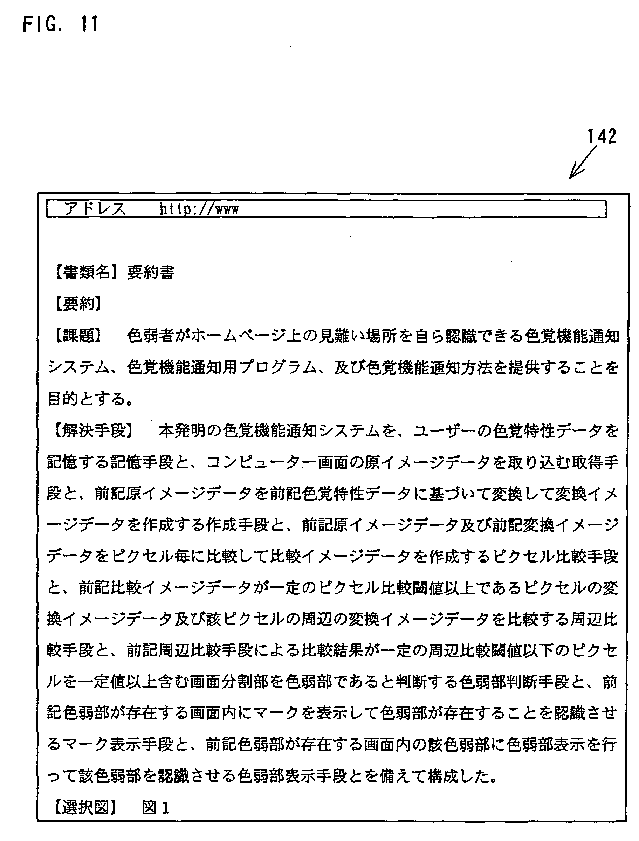

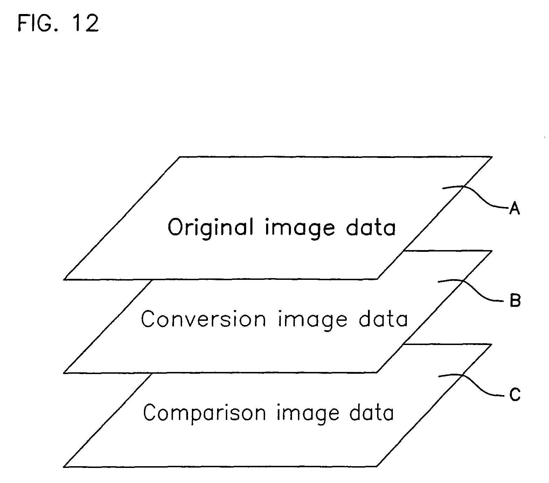

When the user activates his/her personal computer after thus storing the color vision characteristics data D and accesses a web page 142 shown in FIG. 11, the defective color vision notification system 110 is executed automatically or selectively. When the system 110 is executed, the obtaining means 114, preparing means 116 and pixel comparing means 118 are activated to prepare original image data A, conversion image data B, and comparison image data C, respectively, as shown in FIG. 12. The comparison image data C is prepared as data format made by subtracting the original image data A and the conversion image data B for each pixel, for example.

Next, the surrounding comparing means 120 starts to operate and determines, for each pixel, the presence or absence of pixel in which comparison image data C exceeds a certain pixel comparison threshold. If there is such pixel, the means 120 compares conversion image data B of that pixel with conversion image data B around the pixel. Next, the unrecognizable part determining means 124 starts to operate and determines, as a unrecognizable part 122, a split screen portion comprising more than a certain value of pixel in which a comparison value obtained by a comparison made by the surrounding comparing means 120 does not exceed a certain surrounding comparison threshold value because such pixel can be hardly distinguished from a surrounding pixel by the user. The conversion image data B is image data that the user can actually perceive. By comparing the conversion image data B with surrounding image data, the unrecognizable part 122 the color of which the user can hardly distinguish is determined.

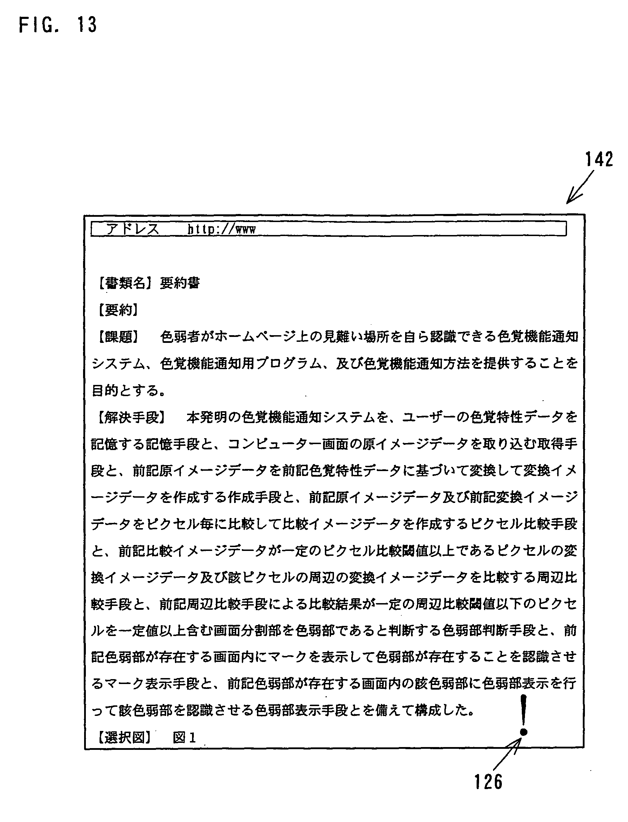

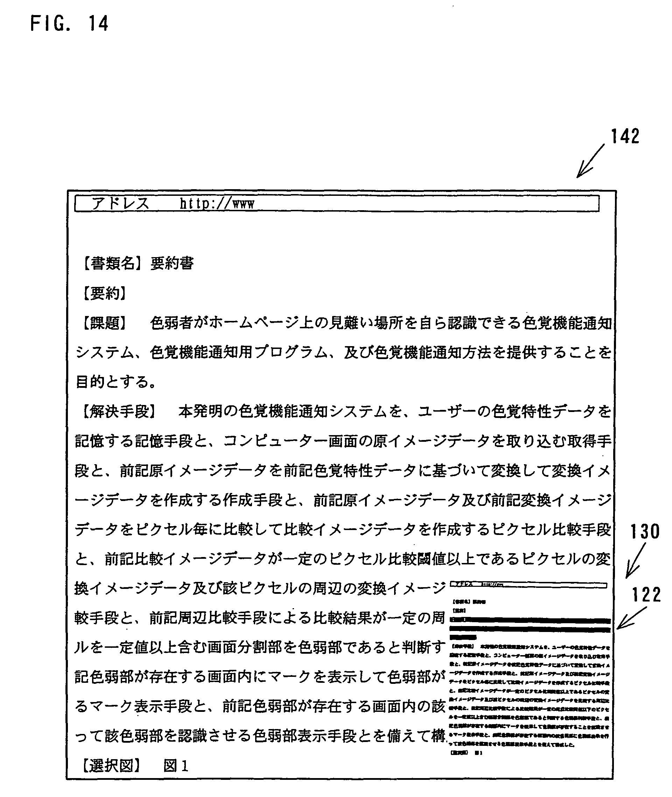

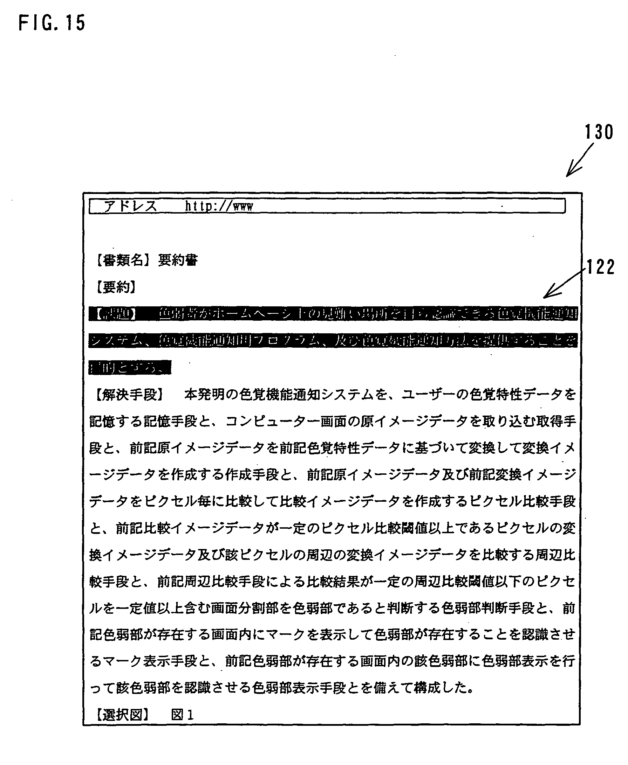

If the unrecognizable part 122 is present, mark displaying means 128 starts to operate and displays exclamation mark 126 on the screen, as shown in FIG. 13. This exclamation mark 126 makes the user aware that an unrecognizable part 122 is present on the display screen. Next, unrecognizable part displaying means 130 starts to operate and inverts the original data A of the unrecognizable part 122. The unrecognizable part 122 is displayed as shown in Figs. 14 and 15. Thus the user becomes aware of the position of the unrecognizable part 122. The unrecognizable part may be more clearly inverted or may be more clearly contrasted as the degree of danger increases.

When the user notices the presence and the position of the unrecognizable part 122, he/she starts up a color discrimination aid system, for example, the color discrimination aid system 111 of the present invention.

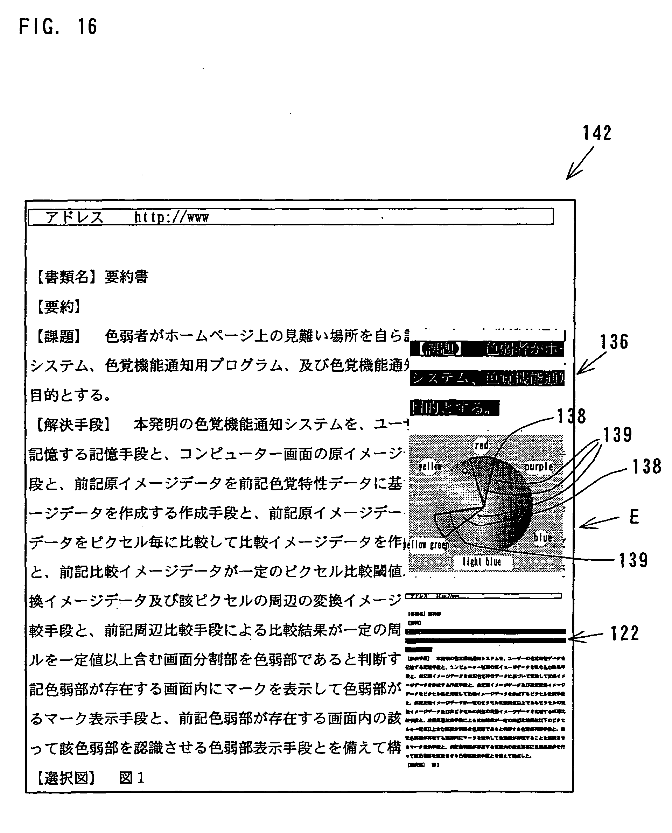

When the color discrimination aid system 111 is activated, the color vision characteristics displaying means 134 starts to operate and color vision characteristics display data E is displayed on the basis of the stored color vision characteristics data D, as shown in FIG. 16. Further, image changing means 136 starts to operate and searches the display to find a corresponding portion related to the color vision characteristics display data E and prominently displays the original image data A of the corresponding portion on the screen. For example, in the color vision characteristics data E shown in FIG. 16, a red color range 138 and a yellow green color range 138 are defined as defective color vision. Therefore, the means 136 searches the display to find a portion colored red or similar color and a portion colored yellow green or similar color as a corresponding portion, and inverts and displays the corresponding portion on the screen, which is placed above the color vision characteristics display data E.

The color vision characteristics display data E can be changed by activating the color vision characteristics changing means 132. The range 38 can be changed by clicking and dragging a line 139 that surrounds the range 138 in the HSB space. Although the color vision display data E is also changed in accordance with the change of the range 138, the image changing means 136 instantaneously starts to operate, searches the display to find a corresponding portion related to the color vision characteristics display data E, prominently displays the original image data A of the corresponding portion above the color vision characteristics display data E on the screen. Therefore, changes of a corresponding portion can be viewed in real time while the color vision characteristics display data E is being changed. The user can check his/her own color vision characteristics by comparing the displayed color vision characteristics display data E and the display screen. In addition, since a position of a corresponding portion is changed in real time while the data E is change in an analog fashion, the user can realize his/her own color vision characteristics instinctively.

While the one embodiment of the defective color vision notification system and the color discrimination aid system of the present invention has thus been described, the present invention can also be materialized in other embodiments.

For example, the defective color vision notification system and the color discrimination aid system of the present invention is targeted not only for the freeze-frame image, but also for moving image. In the case of moving image, the color vision characteristics display data and the corresponding portion are advanced frame by frame, following the moving image.

The present invention is intended to embrace various modifications, alternations and changes made on the basis of knowledge of those skilled in the art without departing from the scope of the invention. Further, any of the specific inventive aspects of the present invention may be replaced with other technical equivalents for embodiment of the present invention, as long as the effects and advantages intended by the invention can be insured.

### INDUSTRIAL APPLICABILITY

As described above, in the visual aid network system of the present invention, when the visual aid network server receives an e-mail message with image data of an object taken by a digital camera built in a portable terminal, it automatically sends back an e-mail message with color data of the object to the mobile terminal. Thus this network system is very simple and convenient.

According to the present invention, color information of a target object can be obtained from an e-mail message, telephone service, web page, or the like. Therefore, unlike a conventional device that gives color information to the user by voice, nobody around the user of the present invention becomes aware that the user has color vision deficiency.

Further, a mobile phone equipped with a camera has become widespread and many people carry it today, so that it doesn't draw too much attention. Furthermore, since color information of a target item can be obtained from a compact and light-weight mobile phone, there is no need to carry a special device for distinguishing color.

The defective color vision notification system and the color discrimination aid system of the present invention allow the user to check if there is a unrecognizable part in a display screen of his/her computer and where is the unrecognizable part. Further, since the unrecognizable part is determined by the surrounding comparing means, the user can check not only the presence of an unrecognizable part but also the presence of a part, the color, pattern, and character of which the user can hardly recognize because of color balance between that part and its surrounding part. Furthermore, since the user's color vision characteristics are previously checked and stored in the storing means as user's color vision characteristics data and the unrecognizable part is determined on the basis of this data, the unrecognizable part can vary depending on the user. Further, the unrecognizable part is determined by comparing the conversion image data that the user can actually perceive with surrounding image data, the unrecognizable part can be determined with accuracy.

In addition, the color discrimination aid system, the color discrimination aid program, and the color discrimination aid method of the present invention allow the user to check a corresponding portion while color vision characteristics display data based on the previously registered color vision characteristics data is being changed. Therefore, the user can notice his/her own color vision characteristics.

## Claims

1. A visual aid network server comprising:
image data receiving means for receiving image data from a portable terminal;
user data storing means for storing the image received from the image data receiving means;
image color data analyzing means for obtaining the image data from the user data storing means to generate color data of the image: and
color data transmitting means for transmitting the color data generated by the image color data analyzing means to the portable terminal.

2. The visual aid network server according to claim 1, wherein said color data transmitting means transmits the color data via a network.

3. The visual aid network server according to claim 2, wherein said network is the Internet.

4. The visual aid network server according to any one of claims 1 to 3, further comprising web page distribution means for distributing the color data and the image data by displaying them on a web page.

5. The visual aid network server according to any one of claims 1 to 3, wherein said color data transmitting means transmits the color data to the portable terminal via e-mail.

6. The visual aid network server according to any one of claims 1 to 3, wherein said user data storing means registers a phone number of the portable terminal and the color data transmitting means obtains the phone number from the user data storing means and transmits the color data of the image data received form the portable terminal to the portable terminal having the phone number as voice data.

7. The visual aid network server according to any one of claims 1 to 3, wherein said image color data analyzing means generates color data of a region around a central dot of the received image.

8. The visual aid network server according to any one of claims 1 to 3, wherein said image color data analyzing means generates color data of a region around a dot specified on the web page of the portable terminal by a pointer and said color data transmitting means transmits the color data generated by the image color data analyzing means to the potable terminal.

9. A visual aid network system, in which the visual aid network server according to any one of claims 1 to 3 receives image data from the portable terminal and transmits the color data to the portable terminal.

10. A visual aid method in which a visual aid network server and a portable terminal receive and transmit image data and color data via a network, comprising the steps of:
photographing image with a camera built in the portable terminal; transmitting the image data to the visual aid network server via a network by portable sending and receiving means of the portable terminal; receiving the image data by image data receiving means of the visual aid network server; storing the image data received by the image data receiving means by user data storing means of the visual aid network server; obtaining the image data from the user data storing means by image color data analyzing means of the visual aid network server so as to generate color data from the image data; transmitting the color data generated by the image color data analyzing means to the portable terminal via the network by color data transmitting means of the visual aid network server; and receiving the color data transmitted by the color data transmitting means via the network by the portable sending and receiving means of the portable terminal.

11. The visual aid method according to claim 10 wherein said network is the Internet.

12. The visual aid method according to claim 10 or 11, wherein said visual aid network server comprises web page distribution means and said web page distribution means distributes the color data and the image data to the network by displaying them on a web page.

13. The visual aid method according to claim 10 or 11, wherein said color data transmitting means transmits the color data to the portable terminal via e-mail.

14. The visual aid method according to claim 10 or 11, wherein said user data storing means registers a phone number of the portable terminal and said color data transmitting means obtains the phone number from the user data storing means and transmits the color data of the image data received form the portable terminal to the portable terminal having the phone number as voice data.

15. The visual aid method according to claim 10 or 11, wherein said image color data analyzing means generates color data of a region around a central dot of the received image.

16. The visual aid method according to claim 10 or 11, wherein said image color data analyzing means generates color data of a region around a dot specified on the web page by a pointer and said color data transmitting means transmits the color data generated by the image data generated by the image color data analyzing means to the potable terminal.

17. A visual aid system which is incorporated into a portable terminal, comprising:
photographing means for photographing image;
user data storing means for storing the image photographed by the photographing means;
image color data analyzing means for generating color data of the image stored in the user data storing means; and
color data displaying means for displaying the color data generated by the image color data analyzing means.

18. A defective color vision notification system, comprising:
storing means for storing user's color vision characteristics data;
capturing means for capturing original image data of a display screen of a computer;
preparing means for preparing conversion image data by converting the original image data in accordance with the user's color vision characteristics data;
pixel comparing means for comparing the original image data with the conversion image data for each pixel to prepare comparison image data;
surrounding comparing means for comparing conversion image data of a pixel in which the comparison image data exceeds a certain pixel comparison threshold value with conversion image data around the pixel;
unrecognizable part determining means for determining, as a unrecognizable part, a split screen portion comprising more than a certain value of pixel in which a comparison value obtained by a comparison made by the surrounding comparing means does not exceed a certain surrounding comparison threshold value;
mark displaying means for displaying a mark on a display screen where the unrecognizable part is present to indicate the presence of the unrecognizable part; and
unrecognizable part displaying means for prominently displaying the unrecognizable part on the screen.

19. The defective color vision notification system according to claim 18, wherein said unrecognizable part displaying means displays the unrecognizable part by inverting, shading, and boldfacing the original image data of the unrecognizable part.

20. A defective color vision notification program that makes a computer function as:
storing means for storing user's color vision characteristics data;
capturing means for capturing original image data of a display screen of a computer;
preparing means for preparing conversion image data by converting the original image data in accordance with the user's color vision characteristics data;
pixel comparing means for comparing the original image data with the conversion image data for each pixel to prepare comparison image data;
surrounding comparing means for comparing conversion image data of a pixel in which the comparison image data exceeds a certain pixel comparison threshold value with conversion image data around the pixel;
unrecognizable part determining means for determining, as a unrecognizable part, a split screen portion comprising more than a certain value of pixel in which a comparison value obtained by a comparison made by the surrounding comparing means does not exceed a certain surrounding comparison threshold value;
mark displaying means for displaying a mark on a display screen where the recognizable part is present to indicate the presence of the unrecognizable part; and
unrecognizable part displaying means for prominently displaying the unrecognizable part on the screen.

21. A defective color vision notification method, comprising the steps of:
storing user's color vision characteristics data by storing means;
capturing original image data of a display screen of a computer by capturing means;
preparing conversion image data by converting the original image data in accordance with the user's color vision characteristics data by preparing means;
comparing the original image data with the conversion image data for each pixel to prepare comparison image data by pixel comparing means;
comparing conversion image data of a pixel in which the comparison image data exceeds a certain pixel comparison threshold value with conversion image data around the pixel by surrounding comparing means;
determining, as a unrecognizable part, a split screen portion comprising more than a certain value of pixel in which a comparison value obtained by a comparison made by the surrounding comparing means does not exceed a certain surrounding comparison threshold value by unrecognizable part determining means;
displaying a mark on a display screen where the recognizable part is present to indicate the presence of the unrecognizable part by the mark displaying means; and
prominently displaying unrecognizable part on the screen by unrecognizable part displaying means.

22. A color discrimination aid system, comprising:
storing means for storing user's color vision characteristics data;
color vision characteristics displaying means for displaying color vision characteristics display data based on the color vision characteristics data;
color vision characteristics changing means for changing the color vision characteristics display data, and image changing means for searching for a corresponding portion related to the color vision characteristics display data in the screen and prominently displaying image data of the corresponding portion on the screen.

23. The color discrimination aid system according to claim 22, wherein said image changing means searches for a corresponding portion related to the changed color vision characteristics display data and prominently displays image data of the corresponding portion on the screen when changing the color vision characteristics display data.

24. The color discrimination aid system according to claim 23, wherein said color vision characteristics display data is defined by selecting a point, line, or range in a color space and said color vision characteristics changing means changes the color vision characteristics data by adding or deleting the point, line, or range or changing the position of the point, line, or range in the color space.

25. The color discrimination aid system according to claim 24, wherein the color vision characteristics display data is changed by continuously changing the position of the point, line, or range in the color space.

26. A color discrimination aid program that makes a computer function as:
storing means for storing user's color vision characteristics data;
color vision characteristics displaying means for displaying color vision characteristics display data based on the color vision characteristics data;
color vision characteristics changing means for changing the color vision characteristics display data; and
image changing means for searching for a corresponding portion related to the color vision characteristics display data in the screen and prominently displaying the image data of the corresponding portion on the screen.

27. A color discrimination aid method, comprising the steps of:
storing user's color vision characteristics data by the storing means;
displaying color vision characteristics display data based on the color vision characteristics data by color vision characteristics displaying means;
changing the color vision characteristics display data by color vision characteristics changing means; and
searching for a corresponding portion related to the aforementioned color vision characteristics display data in the screen and prominently displaying image data of the corresponding portion on the screen by image changing means.

28. The defective color vision notification system according to claim 18 or 19, further comprising:
color vision characteristics displaying means for displaying color vision characteristics display data based on the color vision characteristics data;
color vision characteristics changing means for changing the color vision characteristics display data; and
image changing means for searching for a corresponding portion related to the color vision characteristics display data in the screen and prominently displaying image data of the corresponding portion.
